Europäisches Patentamt

(19) European Patent Office

Office européen des brevets

(11) Numéro de publication: **0 061 095
B1**

(12) **FASCICULE DE BREVET EUROPEEN**

(45) Date de publication du fascicule du brevet:
16.01.85

(21) Numéro de dépôt: **82102009.6**

(22) Date de dépôt: **12.03.82**

(51) Int. Cl.⁴: **B 67 B 3/20,** F 16 D 43/21, F 16 D 7/02

(54) Tête visseuse à friction contrôlée par couple de torsion pour la mise en place de capsules.

(30) Priorité: **25.03.81 FR 8106033**

(43) Date de publication de la demande:
**29.09.82 Bulletin 82/39**

(45) Mention de la délivrance du brevet:
**16.01.85 Bulletin 85/3**

(84) Etats contractants désignés:
**AT BE CH DE GB IT LI LU NL SE**

(56) Documents cités:
**EP - A - 0 018 944
CH - A - 380 455
FR - A - 898 807
FR - A - 1 073 442
FR - A - 2 166 796
FR - A - 2 426 013
GB - A - 626 172
US - A - 3 902 334**

(73) Titulaire: **ETABLISSEMENTS ANDRE ZALKIN ET CIE,
34-36 rue des Coudréaux, F-92504 Rueil (FR)**

(72) Inventeur: **Zalkin, Michel, 61, avenue Belmontet,
F-92210 Saint-Cloud (FR)**

(74) Mandataire: **Casalonga, Axel et al, BUREAU D.A.
CASALONGA OFFICE JOSSE & PETIT
Baaderstrasse 12-14, D-8000 München 5 (DE)**

## Description

L'invention est du domaine du vissage des capsules sur des récipients du type bouteilles, flacons et analogues. Elle vise plus précisément une tête visseuse à friction contrôlée par couple de torsion pour la mise en place des capsules. Parmi les têtes visseuses couramment utilisées dans l'industrie de l'embouteillage, on peut notamment citer celles pourvues d'un embrayage à friction. L'inconvénient majeur d'un embrayage de ce type réside dans le fait que les couples d'application obtenus pour la mise en place de la capsule ne sont pas constants par suite soit de l'échauffement de la tête au cours de fonctionnement, soit de l'influence de l'environnement en présence de nuisances telles qu'humidité, vapeur, projection de liquide et analogues.

On connaît notamment la tête de vissage décrite dans le brevet britannique N° 626172 (Driver) et correspondant au préambule de la revendication 1, qui décrit une tête de vissage, destinée à mettre en place des capsules sur des conteneurs, dans laquelle est monté pivotant sur un moyeu un bloc (a) solidarisé à l'une de ses extrémités à un moyen de serrage (a') de la capsule, cette tête de vissage étant caractérisée par la combinaison d'un disque de friction (g, g') constituant embrayage avec une bague (k') reliée par un ressort de compression (k) à une bague inférieure (h) montée à glissement sur le moyeu et appliquée contre le disque de friction par le ressort (k).

Dans une telle tête, l'embrayage patine lorsque la capsule est complètement vissée, mais le couple d'application sur la capsule n'est pas constant.

La présente invention vise à obvier à cet inconvénient en fournissant une tête visseuse permettant d'obtenir un couple d'application constant lors de la mise en place des capsules. Les moyens définis dans la partie caractérisante de la revendication 1 permettent d'atteindre cet objectif.

L'invention sera mieux comprise à la lecture de la description suivante d'une forme de réalisation non limitative de tête de vissage, en se référant au dessin annexé, dans lequel:

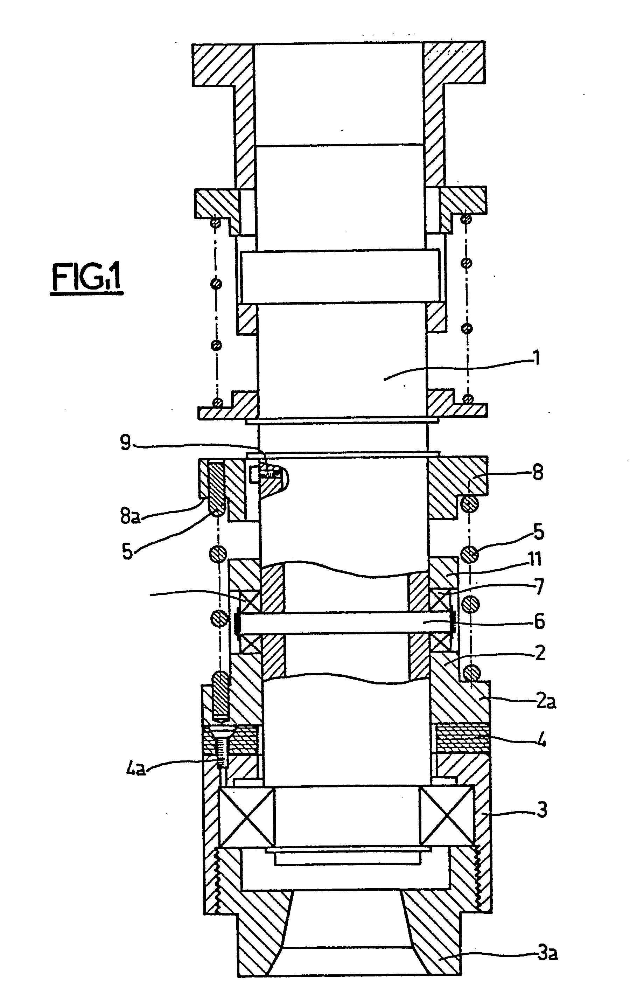

la fig. 1 est une vue en coupe longitudinale axiale de la tête visseuse selon l'invention, et

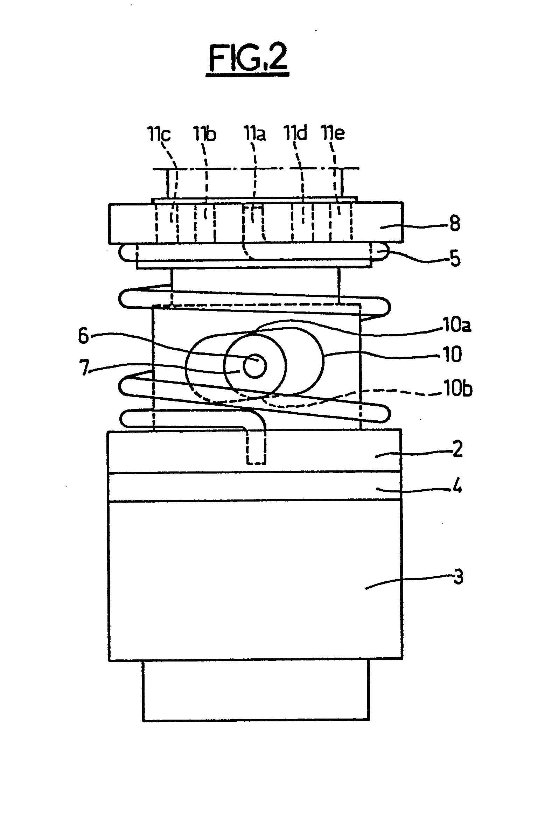

la fig. 2 est une élévation partielle latérale de la tête de vissage de la fig. 1.

La tête de vissage selon l'invention comporte un moyeu 1 à l'extrémité inférieure duquel est monté pivotant un bloc inférieur 3 muni à son extrémité libre d'un cône de vissage 3a ou de tout autre moyen de serrage de la capsule. Ce bloc 3 est solidarisé à son autre extrémité à un disque de friction 4 en un matériau présentant un coefficient de frottement élevé. Une bague inférieure 2 pourvue d'une collerette 2a est disposée au-dessus du disque de friction 4 en contact étroit avec ce dernier par la face inférieure de sa collerette 2a. Sur le corps de la bague inférieure 2 sont ménagées deux lumières 10 opposées à 180° et inclinées d'un certain angle par rapport à l'axe du moyeu. Dans chacune de ces lumières se trouve disposé un galet ou roulement à billes 7 fixé sur le moyeu 1 par l'intermédiaire d'un axe 6 perpendiculaire à l'axe longitudinal du moyeu. Ces galets ou roulements 7 sont agencés pour pouvoir tourner librement sur leur axe.

La bague inférieure 2 est entraînée par le moyeu 1 dans sa rotation par l'intermédiaire d'un ressort de torsion fixé en prenant appui par une de ses extrémités sur la collerette 2a, tandis que l'autre extrémité est engagée à force dans un logement 11a prévu à la face inférieure de la bague supérieure 8 solidaire du moyeu 1. Ce ressort 5 joue également le rôle de ressort de compression pour appliquer la collerette 2a de la bague inférieure 2 sur le disque de friction 4, rendant ainsi cette bague solidaire du bloc 3 dans la rotation du moyeu. D'autre part, le ressort de torsion étant bandé, il tend à faire tourner la bague inférieure 2 dans le sens horaire, ce qui a pour effet de mettre le bord inférieur des lumières 10b en contact avec les galets 7 et à coincer la bague entre les galets 7 et le bloc 3. Cet effet contribue à rendre la bague inférieure 2 et le bloc 3 solidaires en rotation. Dans le but d'obtenir le couple de torsion désiré, la bague supérieure 8 peut être tournée sur elle-même autour du moyeu et bloquée sur ce dernier de façon à tendre plus ou moins le ressort de torsion 5. Afin d'affiner le couple de torsion du ressort 5, on a prévu sur l'épaulement inférieur 8a de la bague supérieure 8 un certain nombre de logements 11a, 11b, 11c, 11d, 11e de même alésage dans lesquels l'extrémité supérieure du ressort 5 peut être enfoncée à force. Dans la phase finale de la mise en place de la capsule, celle-ci étant vissée au couple désiré, le bloc 3 cesse de tourner et, du fait que le disque de friction possède un coefficient de frottement élevé, il fait exécuter à la collerette 2a, et donc à la bague inférieure 2, un léger pivotement dans le sens antihoraire par rapport au moyeu, vainquant la résistance du ressort de torsion. Ce pivotement s'effectue dans les limites d'un jeu, de l'ordre de 5 à 10/100 mm, des galets dans les deux lumières, jeu qui se trouve compensé lorsque le bord supérieur 10a de chaque lumière 10 vient en contact avec les galets 7, par une très légère montée de la bague inférieure 2, ce qui a pour effet de libérer le bloc 3 et de limiter ainsi l'effort de serrage exercé sur la capsule.

Si, pour des raisons quelconques, le coefficient de frottement du disque de friction 4 devait augmenter, le couple de serrage appliqué sur la capsule resterait le même, car celui-ci est déterminé uniquement par le réglage préalable du couple de torsion du ressort 5. Dès que le couple de serrage prévu a été obtenu, le bloc 3 ne serait plus entraîné de la même manière que spécifié précédemment.

Lorsque l'opération est terminée et que la capsule n'est plus engagée dans le cône de serrage solidaire du bloc 3, ou que les mâchoires commandées l'ont libéré, le ressort de torsion 5 replace la bague inférieure 2 et le bloc 3 en position d'engagement en faisant descendre ladite bague 2 grâce à l'inclinaison, de l'ordre de 4°, des lumières 10.

## Revendications

1. Tête de vissage, notamment destinée à mettre en place des capsules sur des conteneurs du type bouteilles, flacons et analogues, dans laquelle est monté pivotant sur un moyeu (1) un élément ou bloc (3) solidarisé à une de ses extrémités à un moyen de serrage de la capsule, ladite tête de vissage comprenant un embrayage à friction mis en pression par un ressort de compression et entraînant le susdit bloc en vue d'assurer en fin de vissage le patinage de l'embrayage, ladite tête de vissage étant caractérisée par le fait qu'elle est à friction contrôlée par couple de torsion grâce à la combinaison avec un disque de friction (4) à coefficient de frottement élevé, fixé sur la face supérieure du bloc (3), d'une bague supérieure (8) servant au réglage du couple de torsion du ressort unique de torsion et de compression (5) relié à une bague inférieure (2) montée à glissement sur le moyeu (1) et appliquée contre le disque de friction (4) par le ressort (5), et d'un ensemble de galets ou roulements à billes (7) montés aux extrémités d'un axe (6) solidaire du moyeu (1) et perpendiculaire à l'axe dudit moyeu, axe susceptible de prendre un déplacement dans deux lumières (10) opposées à 180° ménagées dans le corps de la bague inférieure (2) et inclinées d'un certain angle par rapport à l'axe dudit moyeu (1), pour produire un effet de coincement de la bague inférieure (2) entre les galets (7) et le bloc (3) qui deviennent solidaires en rotation et permettre, lors de la phase finale de la mise en place de la capsule qui est alors vissée au couple désiré, le bloc (3) cessant de tourner, d'imprimer à la bague inférieure (2) un léger pivotement en sens inverse contre l'action du ressort de torsion (5) et en même temps un léger soulèvement de la bague inférieure (2) à raison de l'inclinaison des deux lumières (10) de guidage des galets (7) ce qui a pour effet de libérer le bloc (3) en limitant l'effort de serrage exercé sur la capsule et en permettant le patinage de l'embrayage constitué par la bague (2) et le disque de friction (4) solidaire du bloc (3) de telle sorte qu'on obtient le couple d'application constant désiré sur la tête de capsule lors de sa mise en place.

2. Tête de vissage selon la revendication 1, caractérisée par le fait que, pour affiner le couple de torsion du ressort (5), on a prévu sur la bague supérieure (8) un certain nombre de logements de même alésage dans lesquels l'extrémité supérieure dudit ressort (5) peut être enfoncée à force, tandis que son extrémité inférieure est fixée à la bague inférieure (2).

3. Tête de vissage selon les revendications 1 et 2, dans laquelle l'angle d'inclinaison des deux lumières (10) par rapport à l'axe du moyeu (1) est de l'ordre de 4°.

**Patentansprüche**

1. Schraubkopf, insbesondere bestimmt zum Anbringen von Kapseln auf Behältern, wie Flaschen, Fläschchen u.dgl., in dem auf einer Nabe (1) verdrehbar ein Element oder Block (3) angeordnet ist, der an einem seiner Enden mit einer Einspannvorrichtung für die Kapsel verbunden ist, wobei der erwähnte Spannschraubkopf eine Reibungskupplung aufweist, die durch eine Druckfeder belastet wird und den oben erwähnten Block antreibt, um am Ende des Schraubvorganges das Rutschen der Kupplung zu sichern und wobei der erwähnte Schraubkopf dadurch gekennzeichnet ist, dass er eine Reibung mit gesteuertem Drehmoment besitzt aufgrund der Kombination mit einer Reibscheibe (4) mit erhöhtem Reibungskoeffizienten, die auf der Oberseite des Blocks (3) befestigt ist, eines oberen Ringes (8), der zur Steuerung des Drehmomentes einer reinen Verdrehungs- und Druckfeder (5) dient, die an einem unteren Ring (2) befestigt ist, der auf der Nabe (1) gleitend befestigt ist und durch die Feder (5) gegen die Reibscheibe (4) gedrückt ist, und einer Anordnung von Rollen oder Kugellagern (7), die an den Enden einer Achse (6) befestigt sind, die mit der Nabe (1) verbunden ist und zur Achse dieser Nabe senkrecht steht, wobei die Achse in zwei Ausnehmungen (10), die einander um 180° gegenüberliegen und im Körper des unteren Ringes (2) ausgenommen sind und unter einem bestimmten Winkel zur Achse der Nabe (1) geneigt sind, Verschiebebewegungen ausführen kann, um eine Klemmwirkung des unteren Ringes (2) zwischen den Rollen (7) und dem Block (3) zu erzeugen, die miteinander drehfest verbunden werden, und im während der Endphase des Anbringens der Kapsel, die dann mit dem gewünschten Moment aufgeschraubt ist, und während der Block (3) sich zu drehen aufhört, dem unteren Ring (2) eine geringe entgegengerichtete Verdrehung gegen die Wirkung der Verdrehfeder (5) und zu gleicher Zeit wegen der Neigung der beiden Ausnehmungen (10) zur Führung der Rollen (7) einen geringen Hub des unteren Ringes (2) zu erteilen, was zur Folge hat, den Block (3) freizugeben, wodurch die auf die Kapsel ausgeübte Anzugswirkung begrenzt wird und wodurch das Rutschen der Kupplung, die vom Ring (2) und von der Reibscheibe (4), die mit dem Block (3) verbunden ist, ermöglicht ist, so dass man das gewünschte konstante Anzugsmoment auf den Kopf der Kapseln bei ihrem Anbringen erzielt.

2. Schraubkopf nach Anspruch 1, dadurch gekennzeichnet, dass man zur Feineinstellung des Drehmoments der Feder (5) am oberen Ring (8) eine bestimmte Anzahl von Aufnahmen derselben Bohrung vorgesehen hat, in welche das obere Ende der genannten Feder (5) eingedrückt werden kann, wogegen ihr unteres Ende am unteren Ring (2) festgelegt ist.

3. Schraubkopf nach den Ansprüchen 1 oder 2, worin der Neigungswinkel der beiden Ausnehmungen (10) bezogen auf die Achse der Nabe (1) in der Grössenordnung von 4° liegt.

**Claims**

1. A screwing head, designed notably for installing caps on containers like bottles, jars and similar containers, wherein an element or block (3) is mounted to pivot on a hub (1) and fixed at one end to a cap gripping means, the said screwing head comprising a friction clutch pressed into engagement by a compression spring and driving the above-mentioned block so as to ensure that the clutch slips at the end of the tightening operation, characterized in that its friction is controlled by torsion torque by means of the combination with a high-coefficient-of-friction friction disc (4) fixed on the top face of the block (3) of a top collar (8), used to adjust the torsion or twist torque of the single torsion and compression spring (5) connected to a bottom ring (2) fitted with a sliding fit on the hub (1) and pressed against the friction disc (4) by the spring (5), and a set of rollers or ball bearings (7) mounted on the ends of a pin (6) fixed in the hub (1) perpendicular to the centre line of the said hub, which pin can move inside two slots (10) made in the body of the bottom collar (2) at 180° on either side and sloping at a certain angle with respect to the centre line of the said hub (1), so producing the effect of jamming the bottom collar (2) between the rollers (7) and the block (3) which are thus fixed together in rotation and so, in the final stage of installation of the cap which is then tightened to the required torque with the block (3) ceasing to rotate, enabling the bottom collar (2) to be made to swivel slightly in the opposite direction against the action of the torsion spring (5) and at the same time slightly lifting the bottom collar (2) because of the slope of the two roller (7) guide slots (10), which has the effect of releasing the block (3), limiting the tightening force exerted on the cap and allowing slipping of the clutch formed by the collar (2) and the friction disc (4) fixed to the block (3) so that the required constant application torque is produced on the cap head when this cap is being installed.

2. The screwing head according to Claim 1, characterized in that, in order to refine the torsion torque of the spring (5), a certain number of cavities having the same bore are provided on the top ring into which the upper end of the said spring (5) can be driven to a force fit, whilst its lower end is fixed to the bottom ring (2).

3. The screwing head according to Claims 1 and 2, wherein the angle of slope of the two slots (10) to the centre line of the hub (1) is in the order of 4°.

FIG.1

# FIG.2